# EUROPEAN PATENT APPLICATION

(11) **EP 4 067 031 A1**
(43) Date of publication of application: **05.10.2022**
(21) Application number: 21166206.9
(22) Date of filing: 31.03.2021
(51) Int. Cl.: B29B 7/90, C08K 3/04, C08L 77/02

(54) **IMPROVED PERFORMANCE OF CARBON NANOTUBE BASED POLYMERIC MATERIALS**

(71) Applicant: SHPP Global Technologies B.V., 4612 PX Bergen op Zoom (NL)
(72) Inventor: HAGENAARS, Arno, 4612 PX Bergen op Zoom (NL); MERCX, Franciscus Petrus Maria, 4612 PX Bergen op Zoom (NL); VAN DE GRAMPEL, Robert Dirk, 4612 PX Bergen op Zoom (NL); VASTENHOUT, Sidney, 4612 PX Bergen op Zoom (NL); HOEKS, Theodorus Lambertus, 4612 PX Bergen op Zoom (NL); RAMAKRISHNAN, Vaidyanath, 4612 PX Bergen op Zoom (NL)
(74) Representative: Dehns

(57) **Abstract**

Disclosed is a thermoplastic composition comprising from about 40 wt. % to about 95 wt. % of a thermoplastic resin, wherein the thermoplastic resin comprises a semicrystalline polymer; and from about 0.1 wt. % to about 5 wt. % of carbon nanotubes, wherein the carbon nanotubes have an aspect ratio less than about 200, wherein the composition exhibits a percent improvement in creep of at least 40% when measured in accordance with ASTM E139, and wherein the combined weight percent value of all components does not exceed 100 wt. %, and all weight percent values are based on the total weight of the composition.

## Description

### FIELD OF THE DISCLOSURE

The present disclosure relates to polymeric materials comprising carbon nanotubes and microcrystalline cellulose while maintaining physical properties and exhibiting improved creep.

### BACKGROUND OF THE DISCLOSURE

Carbon Nano Tubes (CNT's) may potentially provide several advantageous characteristics in a given polymeric matrix. They may deliver excellent thermal and electrical conductivity, electromagnetic shielding, piezoresistivity, improved mechanical properties, fracture toughness etc. Given these appealing characteristics, these materials are useful in the scientific and the industrial research world. However, CNTs are generally expensive and may result in poor mechanical performance in a polymer matrix. There remains a need in the art for CNT filled materials that maintain mechanical performance.

Aspects of the present disclosure addresses these and other needs.

### BRIEF DESCRIPTION OF THE FIGURES

FIG. 1 presents a graphical representation of the improvement in Creep for Creep DMA compared to Creep station for 1 wt. % CNT in polyamide.
FIG. 2 presents a graphical representation of the percent improvement in creep for samples with CNTs having various aspect ratios.
FIG. 3 presents a graphical representation of the percent improvement in creep as a function of CNT aspect ratio for polyamide based resin.
FIG. 4 presents a graphical representation of the percent improvement in creep as a function of the CNT aspect ratio for polycarbonate based resin.

### SUMMARY

Aspects of the disclosure relate to a composition comprising: from about 40 wt. % to about 95 wt. % of a thermoplastic resin, wherein the thermoplastic resin comprises a semicrystalline polymer; and from about 0.1 wt. % to about 5 wt. % of carbon nanotubes, wherein the carbon nanotubes have an aspect ratio less than about 200, wherein the composition exhibits a percent improvement in creep of at least 40% when measured in accordance with ASTM E139, and wherein the combined weight percent value of all components does not exceed 100 wt. %, and all weight percent values are based on the total weight of the composition..

### DETAILED DESCRIPTION

Carbon nanotubes (CNT) are known to have excellent thermal and electrical conductivity, electromagnetic shielding, piezoresistivity, improved mechanical properties, fracture toughness etc. However, the poor dispersibility of CNT in a polymer matrix, makes them agglomerate thereby deteriorating mechanical properties. Thus, the costs of CNT's and their undesired mechanical performance may make the CNTs less desirable in a plastic material. The present disclosure provides a reinforced polymer matrix (such as polyamide) with carbon nanotubes, and optionally, with a micron-sized cellulose material (microcrystalline cellulose, MCC). Such a multiscale reinforcement using both a micron-size cellulose material (microcrystalline cellulose, MCC) and a CNT could result in higher mechanical properties, including increased fracture toughness and fatigue, and minimized creep. The improvement in mechanical properties may be dependent upon the aspect ratio of the CNT. According to various aspects of the present disclosure, the largest increase in creep performance was observed at aspect ratio less than 200, less than 160, or less than 50. Furthermore, it is observed that the combination of CNT's and MCC provided an unexpected non-linear synergy. The disclosed polymer compositions may exhibit improved mechanical properties including improved creep.

In certain aspects, improvement in mechanical properties may be dependent on the aspect ratio of the CNT. In various examples, an increase in mechanical performance was most apparent at aspect ratio less than 200, less than 160, or less than 50. The combination of carbon nanotubes and microcrystalline cellulose may provide an unexpected non-linear synergy; and the creep performance and melt volume flow rate (MVR) of the composition may be enhanced using the carbon nanotubes of aspect ratio less than 200 and the MCC. with the disclosed compositions improved mechanical properties can be used in advanced applications such as aerospace, automotive, healthcare, transportation, electrical and electronic goods.

A variance in scale (multi-scale) fibers or particles is already well established in polymeric matrices. However, the specific combination of MCC and CNT has not been addressed for the purposes described herein. For example, Effect of multiscale reinforcement on the mechanical properties and microstructure of microcrystalline cellulose carbon nanotube reinforced cementitious composites; A. Alshaghel et al, Composites part B, 149 (2018) 122-134. Multi-scale toughening of fibre composites using carbon nanofibres and z-pins; R Ladani et al, Compos Sci Technol 131 (2016) 98-109. Fabrication of carbon nanotubes/carbon fiber hybrid fiber in industrial scale by sizing process; W Liu et al, Applied Surface Science, 284 (2013) 914-920. Interfacial shear strength of a glass fiber/epoxy bonding in composites modified with carbon nanotubes; A. Godara et al, Composites Science and Technology 70 (2010) 1346-1352. Flame synthesis of carbon nanotubes onto carbon fiber woven fabric and improvement of interlaminar toughness of composite laminates; X Du et al, Compos. Sci. Technol. 101 (2014), 159-166. Mechanical Properties of Carbon Nanotube/Carbon Fiber Reinforced Thermoplastic Polymer Composite; W Liu et al, Polymer Composites (2017) : DOI 10.1002/pc. Creep performance of CNT-based nanocomposites: a parametric study, W Jian et al. Carbon (2019): DOI 10.1016. The foregoing references that involve using CNT for improved properties such as creep and fatigue are inconclusive. Moreover, some findings have been established for thermoset resins but not for thermoplastic resins.

International Published Patent Application WO2008034939A1 discloses a nanocomposite comprising cellulose or functional cellulose and functional nanotubes. These carbon nanotubes and cellulose however are functionalized and do not specify the aspect ratio of the carbon nanotubes, nor the specific improvement in creep observed with semicrystalline polymer.

International Published Patent Application WO2018235905A1 discloses fiber reinforced resin composition contains chemically modified micro-fibrillated cellulose fiber, an inorganic filler and a thermoplastic resin. The reference does not disclose the aspect ratio of the CNT nor the specific improvement in creep observed with semicrystalline polymer.

Further reference *Relations between the aspect ratio of carbon nanotubes and the formation of percolation networks in biodegradable polylactide*/*carbon nanotube composites,* of Wu, et. al, discloses polylactide composites containing carbon nanotubes (CNTs) with high aspect ratio (HAR) and low aspect ratio (LAR) prepared by melt mixing. The reference describes the improvement in mechanical property of the composition with high aspect ratio of CNT. However, the reference does not describe use of cellulose and polyamide or polystyrene as thermoplastic rein.

The present disclosure presents the reinforcement of polymer matrix (for example, semicrystalline resins, such as polyamide and polystyrene) using combination of micron-size cellulose material (microcrystalline cellulose, MCC) and CNT (nanoscale) by twin screw extrusion. The compositions exhibit higher mechanical properties, including increased fracture toughness, improved creep and improved fatigue when compared to substantially similar reference compositions in the absence of MCC or reference amorphous resin (polycarbonate compositions). Creep may refer to the tendency of a polymer to distort under external loads. In various aspects, creep may be measured using Dynamic Mechanical analysis (DMA) according to ASTME139.

The combination of semicrystalline polymer and CNT having an aspect ratio less than about 300, less than about 200 (or less than 160, less than 50) surprisingly provided improved creep performance. Examples of the present disclosure demonstrate that improvement in mechanical properties such as creep may be dependent upon the aspect ratio of the CNT, where the greatest improvement in creep (% improvement) was observed at an aspect ratio less than 200. In further aspects, the combination of CNT's and MCC provided an unexpected non-linear synergy; and the creep performance of the composition was enhanced using the CNT of aspect ratio less than 200 in combination with the MCC. The inventive composites with improved mechanical properties can be used in advanced applications such as aerospace, automotive, healthcare, transportation, electrical and electronic goods.

### Thermoplastic Composition

The disclosed thermoplastic compositions may comprise a base polymer composition, micron-sized cellulose material and carbon nanotubes having a particular aspect ratio. More specifically, the thermoplastic compositions comprise from about 40 wt. % to about 95 wt. % of a thermoplastic resin, wherein the thermoplastic resin comprises a semicrystalline polymer; from about 0.01 wt. % to about 8 wt. % of a microcrystalline cellulose material; and from about 0.1 wt. % to about 5 wt. % of carbon nanotubes, wherein the carbon nanotubes have an aspect ratio less than 200, less than 70, or less than 50. The combined weight percent value of all components does not exceed 100 wt. %, and all weight percent values are based on the total weight of the composition.

The compositions may exhibit improved mechanical properties including increased fracture toughness as well as improved fatigue, and creep. In further aspects, the compositions exhibit improved melt volume flow rate.

These multi-scale or hierarchical polymeric composites have been developed for advanced applications such as aerospace, automotive, healthcare, transportation, electrical and electronic goods.

### Polymer Resin

In an aspect, the thermoplastic composition may comprise a polymer base resin. In various aspects, the polymer base resin may comprise a semicrystalline polymer. Thermoplastic semi-crystalline polymers generally contain domains where the polymer chains are crystalline and domains where the polymer chains are amorphous. The semicrystalline polymer may be characterized by a glass transition temperature and a melting temperature. Below the melting temperature, thermoplastic semi-crystalline polymers may exhibit mechanical and thermal properties better than those of amorphous thermoplastic polymers. Above the melting temperature, thermoplastic semi-crystalline polymers flow and except for very high molecular weights, viscosity reduces abruptly near the melting point. Suitable crystalline and semicrystalline polymers may include polyolefins, fluorinated polymers, polyesters, polyamides, polyimides, thermostable aromatic polymers, polyvinyl alcohols and copolymers thereof.

The polymer base resin of the present disclosure may include a polyamide resin, or a combination of polyamide resins. Polyamide resins useful in the practice of the present invention include a generic family of resins referred to as nylons, which may be characterized by the presence of an amide group (-C(O)NH-). Polyamides, including also polyphthalamides (PPA), suitable for use in the present method include but are not limited to polyamide-6, polyamide-6,6, polyamide-4,6, polyamide 9T, polyamide 10T, polyamide-11, polyamide-12, polyamide-6,10, polyamide-6,12, polyamide 6/6,6, polyamide-6/6,12, polyamide MXD6, polyamide-6T, polyamide-6I, polyamide-6/6T, polyamide-6/6I, polyamide-6, 6/6T, polyamide-6,6/6I, polyamide- 6/6/1761, polyamide-6,6/6T/6I, polyamide-6/12/6T, polyamide-6,6/12/6T, polyamide-6/12/6I, polyamide-6,6/12/6I, and combinations thereof. Nylon-6 and nylon-6,6 represent common polyamides and are available from a variety of commercial sources. Polyamides, however, such as nylon-4,6, nylon-12, nylon-6,10, nylon 6,9, nylon 6/6T and nylon 6,6/6T having triamine contents below about 0.5 wt. %, as well as others, such as amorphous nylons may also be useful. In an example, the polymer composition comprises polyamide-6.

In certain aspects, the polymer resin comprises a semicrystalline, semi-aromatic polyamide which possess a glass transition temperature in the range from 90 to 150 °C, from 110 to 140 °C, and from 115 to 135 °C. The melting point of the polyamide may be from 255 °C to 330° C. The resin composite disclosed herein include a polyamide base resin. Polyamide resins can include a generic family of resins known as nylons which can be characterized by the presence of an amide group (-C(O)NH-). The resins include repeating units linked by an amide group bond.

Polyamide resins may be obtained according to well-known processes such as those described in U.S. Patent Nos. 2,071,250; 2,071,251; 2,130,523; 2,130,948; 2,241,322; 2,312,966; and 2,512,606. As an example, polyamides can be prepared by polymerizing a monoamine-monocarboxylic acid or a lactam thereof having at least two carbon atoms between the amino and carboxylic acid groups. Polyamides may also be prepared by polymerizing substantially equimolecular proportions of a carboxylic acid and a diamine containing at least two carbon atoms between the amino groups. In further examples, polyamides can be prepared by polymerizing a monoaminocarboxylic acid or a lactam thereof with substantially equimolecular proportions of a diamine and dicarboxylic acid. Polyamide resins are commercially available from a wide variety of sources. As used herein, substantially equimolecular proportions can refer to both equimolecular proportions and the departures therefrom which are involved in conventional techniques to stabilize the viscosity of the resultant polyamide. Copolymers of caprolactam with diacids and diamines are also useful.

Monoaminomonocarboxylic acids or lactams thereof may include compounds having from two to sixteen carbon atoms between the amino can carboxylic acid groups. For lactams, the carbon atoms form ring with the -CO-NH- group. Exemplary aminocarboxylic acids and lactams can include 6-aminocaproic acid, butyrolactam, enantholactam, pivaloactam, caprolactam, undecanolactam, capryllactam, dodecanolactam, and 3- and 4- aminobenzoic acids.

Diamines useful in polyamide preparation may include alkyl, aryl and alkyl-aryl diamines. Suitable diamines may be represented by the general formula H₂N(CH₂)NH₂ where n is an integer from 2 to 16. Exemplary diamines may include, but are not limited to, trimethylenediamine, pentamethylene diamine, tetramethylenediamine, octamethylenediamine, hexamethylenediamine, trimethyl hexamethylene diamine, metaxylylene diamine, meta-phenylene diamine, and the like. Other useful diamines include m-xylyene diamine, di-(4-aminophenyl)methane, di-(4-aminocyclohexyl)methane; 2,2-di-(4-aminophenyl)propane, 2,2-di-(4-aminocyclohexyl)propane, among others. Suitable dicarboxylic acids may be aromatic or aliphatic. Aromatic dicarboxylic acids may include isophthalic and terephthalic acids. Aliphatic dicarboxylic acids may be represented by the formula HOOC-Y-COOH where Y represents a divalent aliphatic group containing at least two carbon atoms. Exemplary dicarboxylic acids may include sebacic acid, suberic acid, octadecanedoic acid, glutaric acid, adipic acid, and pimelic acid. Other useful diacids for the preparation of nylons include azelaic acid, dodecane diacid, as well as terephthalic and isophthalic acids, and the like.

Polyamides may generally include aliphatic polyamides which feature an aliphatic main chain; high performance polyamides which feature repeating units of the semiaromatic polypthalamide molecule; and aramides which feature repeating aromatic units.

Exemplary polyamide resins can include nylon-6 (polyamide 6) and nylon-6,6 (polyamide 6,6) which are available from a variety of commercial sources. Other exemplary polyamides can include nylon-4, nylon-4,6 (PA 46), nylon-12, nylon-6,10, nylon-6,9, nylon-6,12, nylon-9T, copolymer of nylon-6,6 and nylon-6, nylon 610 (PA610), nylon 11 (PA11), nylon 12 (PA 12), nylon 6-3-T (PA 6-3-T), polyarylamid (PA MXD 6), polyphthalamide (PPA) and/or poly-ether-block amide, and others such as the amorphous nylons, may also be useful. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane.

Mixtures of various polyamides, as well as various polyamide copolymers, are also useful. In some examples, the polyamide resin can include a combination of nylon 6 and nylon 6,6 in an amount of from about 20 wt. % to about 90 wt. %.

As noted above, in certain examples the resin composite includes from about 40wt. % to about 95 wt. % of the polyamide base resin. In other examples the resin composite includes from about 30 wt. % to about 90 wt. % of the polyamide base resin, or from about 40 wt. % to about 90 wt. % of the polyamide base resin, or from about 50 wt. % to about 90 wt. % of the polyamide base resin, or from about 60 wt. % to about 90 wt. % of the polyamide base resin, or from about 70 wt. % to about 90 wt. % of the polyamide base resin, or even from about 80 wt. % to about 90 wt. % of the polyamide base resin.

In yet further examples, the polyamide base resin of the present disclosure may include polyamide resins having a relative viscosity of from about 2 to about 4 when measured in accordance with ISO 307 at a concentration of 1 gram per deciliter in sulfuric acid solvent. In other examples, the polyamide base resin may include polyamide resins having a viscosity of from about 2.4 to about 3.4, or even from about 2.7 to about 3.1. In general, however, the polyamide base resin can have any desirable viscosity ranging from a low viscosity to a high viscosity, particularly where glass fiber loading is low such as in the specific examples discussed herein. In certain examples having relatively higher glass fiber loadings, however, it may be desirable to include a polyamide base resin having a relatively lower viscosity.

Certain aspects of the composition include from about 5 wt. % to about 99 wt. % of a polymer base resin comprising a semicrystalline polymer, or from about 40 wt. % to about 99 wt. % of a polymer base resin, or from about 55 wt. % to about 99 wt. % of a polymer base resin, or from about 60 wt. % to about 99 wt. % of a polymer base resin, or from about 70 wt. % to about 99 wt. % of a polymer base resin, or from about 40 wt. % to about 95 wt. % of a polymer base resin, or from about 55 wt. % to about 95 wt. % of a polymer base resin, or from about 60 wt. % to about 95 wt. % of a polymer base resin, or from about 75 wt. % to about 95 wt. % of a polymer base resin.

### Micron-sized Cellulose Material (MCC)

"Microcrystalline cellulose (MCC)" or equivalently "cellulose microcrystals" describes cellulose particles, regions, or crystals that contain micrometer-sized domains, or both micron-sized and nanometer-sized domains. "Micron-sized" includes from 1 µm to 100 µm and "nanometer-sized" includes from 0.01 nm to 1000 nm (1 µm). Larger domains (including long fibers) may also be present in these materials. MCC constituting the disclosed thermoplastic compositions of the present disclosure may have a mean diameter of 0.1 nm or more, 0.2 nm or more, 0.5 nm or more, further 0.8 nm or more, and 1 nm or more. In the present specification, the average fiber diameter of the cellulose fibers can be measured using microscopy, such as scanning electron microscopy, transmission electron microscopy or atomic force microscope (AFM).

The average aspect ratio (fiber length/ fiber diameter) of the microcrystalline cellulose fibers may be less than 5. In certain aspects, the average aspect ratio of the microcrystalline cellulose fibers is about 1 to about 5.

MCC may present in the thermoplastic composition in an amount from about 0.01 wt. % to about 8 wt. %, from about 0.1 wt. % to 8 wt. %, from about 0.5 wt. % to about 5 wt. %, or from about 0.5 wt. % to about 3 wt. %.

### Carbon Nanotubes (CNT)

The present thermoplastic compositions include carbon nanotubes. The carbon nanotube may have conductivity of 0.01 S/cm or more. Conductivity of the carbon nanotube composition material itself is 0.01 S/cm or less.

A length of the carbon nanotubes is 0.1 µm, 0.2 µm, 0.3 µm, or more. In further examples, the length of the carbon nanotubes may be from about 500 nm (0.5 µm) to about 20 µm. An average diameter of the carbon nanotubes may be from about 5 nm to about 50 nm. In yet further aspects, the carbon nanotubes exhibit an average aspect ratio (fiber length / fiber diameter) less, than 200, less than 50, less than 40, or less than 30.

In certain aspects, the carbon nanotubes may be combined in the thermoplastic composition in a masterbatch. The carbon nanotube masterbatch may contain contains about 5% to about 25% by mass of carbon nanotubes and about 75 to about 95% by mass of a suitable polymer with respect to its mass. In some aspects, the suitable polymer of the masterbatch is a polyamide.

CNTs may present in the thermoplastic composition in an amount from about 0.01 wt. % to about 5 wt. %, from about 0.1 wt. % to 5 wt. %, from about 0.5 wt. % to about 5 wt. %, or from about 0.5 wt. % to about 3 wt. %.

### Other Additives and Additional Fillers

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt% each based on the total weight of the composition.

According to certain aspects, the polymer compositions may maintain mechanical performance even with high levels of fillers (for example, greater than 30 wt. % filler based on the total weight of the polymer composition).

The composite disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composite may comprise a glass fiber filler. In yet further aspects, the composite may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

The additive composition can include a flow modifier, reinforcing agent, antioxidant, heat stabilizer, light stabilizer, ultraviolet light stabilizer, ultraviolet absorbing additive, plasticizer, lubricant, release agent, antistatic agent, anti-fog agent, antimicrobial agent, chain extender, colorant, de-molding agents, flow promoter, flow modifier, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAFOS^{™} 168. Heat stabilizers are generally used in amounts of 0.01 to 5 wt%, based on the total weight of polymer in the composition.

There is considerable overlap among plasticizers, lubricants, and mold release agents, which include, for example, glycerol tristearate (GTS), phthalic acid esters (for example, octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (for example, alkyl stearyl esters, such as, methyl stearate, stearyl stearate, and the like), waxes (for example, beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

Light stabilizers, in particular ultraviolet light (UV) absorbing additives, also referred to as UV stabilizers, include hydroxybenzophenones (for example, 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB^{™} UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB^{™} 5411 from Cytec Industries Inc., Woodland, NJ) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Inorganic flame retardants can also be used, for example salts of C1-16 alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, and/or Na₃AlF₆. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Anti-drip agents can be used in amounts of 0.1 to 10 parts by weight, based on 100 parts by weight of the total composition, excluding any filler.

The resin compositions can be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230 °C and about 350 °C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some embodiments at least some of the components are added sequentially. For example, the polymer resin component(s), and any impact modifier component can be added to the extruder at the feed throat or in feeding sections adjacent to the feed throat, or in feeding sections adjacent to the feed throat, while the filler and/or part of the polymer resin component can be added to the extruder in a subsequent feeding section downstream. Alternatively, the sequential addition of the components may be accomplished through multiple extrusions. A composition may be made by pre-extrusion of selected components, such as the polymer component, to produce a pelletized mixture. A second extrusion can then be employed to combine the pre-extruded components with the remaining components. The filler component can be added as part of a masterbatch or directly. The extruder can be a two lobe or three lobe twin screw extruder.

In one aspect, the present disclosure pertains to plastic components, for example, that have been shaped, formed, or molded at least in part from the compositions described herein. Also provided are plastic components comprising a resin composition that is formed according to the presently disclosed methods for forming a resin composition.

### Properties and Articles

The disclosed polymer compositions may exhibit improved long term mechanical properties including improved creep. As an example, the composition may exhibit a percent improvement in creep of at least 40% when measured in accordance with ASTME13

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. The compositions may be useful for electrically conducting purposes as well.

The advantageous characteristics of the compositions disclosed herein make them appropriate for an array of uses.

### Methods of Manufacture

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects, the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite. In certain aspects, a method may comprise subjecting the polymer composition to a process comprising foaming, sheet forming, pipe extrusion, or nano molding technology (NMT) processes.

Various combinations of elements of this disclosure are encompassed by this disclosure, for example, combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein, semicrystalline polymer may refer to a polymer comprising a crystallizable portion, pendent chain or sequence in the skeleton, and an amorphous portion in the skeleton, and having a first-order reversible temperature of phase change, in particular of melting (solid-liquid transition). The semicrystalline polymer(s) of the composition of the invention has (have) a number-average molecular mass (weight) Mn of greater than or equal to 2,000, ranging, for example, from 2,000 to 800,000, preferably from 3,000 to 150,000 Daltons.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

In various aspects, the present disclosure pertains to and includes at least the following aspects.
Aspect 1. A composition comprising: from about 40 wt. % to about 95 wt. % of a thermoplastic resin, wherein the thermoplastic resin comprises a semicrystalline polymer; and from about 0.1 wt. % to about 5 wt. % of carbon nanotubes, wherein the carbon nanotubes have an aspect ratio less than about 200, wherein the composition exhibits a percent improvement in creep of at least 40% when measured in accordance with ASTM E139, and wherein the combined weight percent value of all components does not exceed 100 wt. %, and all weight percent values are based on the total weight of the composition.
Aspect 2. The composition according to aspect 1, wherein the thermoplastic resin comprises polyamide, syndiotactic polystyrene, polyester, polyphenylene sulfide (PPS), copolymers thereof, or a combination thereof.
Aspect 3. The composition according to aspect 1 or 2, wherein the composition further comprises a microcrystalline cellulose material.
Aspect 4. The composition according to any one of aspects 1-3, wherein the composition further comprises from about 0.01 wt. % to about 8 wt. % of a microcrystalline cellulose material.
Aspect 5. The composition according to any one of aspects 1-4, wherein the carbon nanotubes have an aspect ratio less than about 160.
Aspect 6. The composition according to any one of aspects 1-4, wherein the carbon nanotubes have an aspect ratio less than about 70.
Aspect 7. The composition according to any one of aspects 1-4, wherein the carbon nanotubes have an aspect ratio less than about 50.
Aspect 8. The composition according to any one of aspects 1-7, wherein the semicrystalline resin is a polyamide.
Aspect 9. The composition according to aspects 1-8, wherein the composition exhibits a percent improved creep of at least 100% compared to a neat sample of thermoplastic resin.
Aspect 10. The composition according to any one of aspects 1 to 8, further comprising from about 0.01 wt. % to about 25 wt. % of at least one additional additive.
Aspect 11. The composition according to aspect 10, wherein the at least one additional additive comprises a nucleation agent, stabilizer, additional impact modifier, acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.
Aspect 12. An article comprising the thermoplastic composition according to any of aspects 1 to 11.
Aspect 13. A method comprising subjecting a polymer composition of aspects 1-12 to a process comprising foaming, sheet forming, pipe extrusion, or nano molding technology (NMT) processes.
Aspect 13. A composition comprising: from about 40 wt. % to about 95 wt. % of a thermoplastic resin, wherein the thermoplastic resin comprises a semicrystalline polymer; from about 0.01 wt. % to about 8 wt. % of a microcrystalline cellulose material; and from about 0.1 wt. % to about 5 wt. % of carbon nanotubes, wherein the carbon nanotubes have an aspect ratio less than about 200, wherein the composition exhibits a percent improvement in creep of at least 40% when measured in accordance with ASTM E139, wherein the combined weight percent value of all components does not exceed 100 wt. %, and all weight percent values are based on the total weight of the composition.
Aspect 15. A composition comprising: from about 40 wt. % to about 95 wt. % of a semi crystalline polymer; from about 0.01 wt. % to about 8 wt. % of a microcrystalline cellulose material; and from about 0.1 wt. % to about 5 wt. % of carbon nanotubes, wherein the carbon nanotubes have an aspect ratio less than about 200, wherein the composition exhibits a percent improvement in creep of at least 40% when measured in accordance with ASTM E139, wherein the combined weight percent value of all components does not exceed 100 wt. %, and all weight percent values are based on the total weight of the composition.
Aspect 16. A composition comprising: from about 40 wt. % to about 95 wt. % of a semicrystalline polymer; from about 0.01 wt. % to about 8 wt. % of a microcrystalline cellulose material; and from about 0.1 wt. % to about 5 wt. % of carbon nanotubes, wherein the carbon nanotubes have an aspect ratio less than about 200, wherein the combined weight percent value of all components does not exceed 100 wt. %, and all weight percent values are based on the total weight of the composition.
Aspect 17. A composition comprising: from about 40 wt. % to about 95 wt. % of a thermoplastic resin, wherein the thermoplastic resin comprises a semicrystalline polymer; and from about 0.1 wt. % to about 5 wt. % of carbon nanotubes, wherein the carbon nanotubes have an aspect ratio less than about 200, wherein the composition exhibits a percent improvement in creep of at least 40% when measured in accordance with ASTM E139, and wherein the combined weight percent value of all components does not exceed 100 wt. %, and all weight percent values are based on the total weight of the composition.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

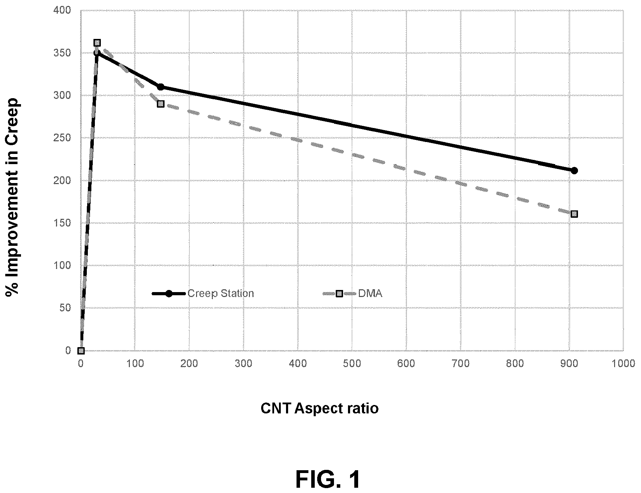

Creep was measured on the samples using Dynamic Mechanical analysis (DMA). In this study Q800 stress-controlled DMA from TA instruments was used. Creep was studied on 1mm thick samples using a temperature sweep (30- 200 °C for polyamide and 30-130 °C for polycarbonate) at constant stress. This was followed by using time temperature superposition to construct the master curve for a reference temperature. The DMA method is faster and compares well with the ASTM/ISO creep method as shown in FIG. 1 and table 1, where a standard ASTM or ISO bar is subjected to a constant temperature and stress for a given time (10E+5 sec).

**Table 1. Creep DMA vs. Creep station for 1 wt. % CNT in Polyamide**

| **Aspect ratio** | **% Improvement in creep (station)** | **% Improvement in DMA** |
|---|---|---|
| 0 | 0 | 0 |
| 50 | 350 | 362 |
| 147 | 310 | 290 |
| 909 | 212 | 161 |

The raw materials used in the experiments are listed in Table 2, whereas the information with respect to the CNT masterbatches and the aspect ratio of the CNTs used are listed in Table 3 and Table 4, respectively.

**Table 2. General Materials.**

| **Material** | **Supplier** | **Description** |
|---|---|---|
| Sniamine ASN 32-35 | RHODIA | High amine end group polyamide 6 |
| PC-1 | SABIC | Linear Bisphenol A polycarbonate end-capped with para-cumyl phenol (PCP), produced via interfacial polymerization, Mw of approximately 20,000-25,000 g/mol as determined by GPC using bisphenol A homopolycarbonate standards; MVR (230°C/1.2kg) 29.6 cm³/10 minutes |
| PC-2 | SABIC | Linear Bisphenol A polycarbonate end-capped with phenol, produced via interfacial polymerization, Mw of approximately 27,000-33,000 g/mol as determined by GPC using bisphenol A homopolycarbonate standards, MVR (230°C/1.2kg) 5.9 cm³/10 minutes |
| Evernox 76 | Everspring | benzenepropanoic acid, 3, 5-bis(1,1-dimethylethyl)-4-hydrox-, octadecyl ester |
| Irganox^{™} 1098 | BASF | N,N -hexamethylene bis 3,5-di-tert-butyl-4-hydroxy hydrocinnamamide |
| Irgafos^{™} 168 | BASF | Tris(2,4-di-t-butylphenyl)phosphite |
| MCC | Sigma Aldrich | Microcrystalline cellulose (particle size 51 micron) |

**Table 3. Masterbatches for carbon nanotubes**

| **MB/compound** | **CNT-type** | **Resin** | **loading (wt%)** | **Mw** | **Mn** | **d** |
|---|---|---|---|---|---|---|
| MB-1 | CNT-1 | PC | 12 | 15000 | 6400 | 2.3 |
| MB-2 | CNT-2 | PC | 15 | 17800 | 8300 | 2.1 |
| MB-3 | CNT-3 | PC | 3 | 16300 | 7400 | 2.2 |
| MB-4 | CNT-4 | PC | 10 | 17400 | 7600 | 2.3 |
| MB-5 | CNT-5 | PC | 15 | 16400 | 7500 | 2.2 |
| MB-6 | CNT-6 | PC | 12 | 12500 | 4800 | 2.6 |
| MB-7 | CNT-1 | PA66 | 15 | | | |
| MB-8 | CNT-2 | PA6 | 15 | | | |
| MB-9 | CNT-3 | PA66 | 10 | | | |

**Table 4. Aspect ratios for carbon nanotubes.**

| CNT | Length (nm) | Diameter (nm) | Aspect Ratio |
|---|---|---|---|
| CNT-1 | 10000 | 11 | 909 |
| CNT-2 | 1400 | 9.5 | 147 |
| CNT-3 | 750 | 15 | 50 |
| CNT-4 | 7900 | 9 | 878 |
| CNT-5 | 20000 | 9 | 2222 |
| CNT-6 | 2800 | 11 | 255 |

Various composition samples were prepared and are presented in Tables 5 and 6 corresponding to inventive samples E1 - E8 (polyamide based) and comparative samples CS1 - C11 (polycarbonate-based).

**Table 5. Polyamide-6 based CNT formulations E1 through E8.**

| | **E1** | **E2** | **E3** | **E4** | **E5** | **E6** | **E7** | **E8** |
|---|---|---|---|---|---|---|---|---|
| **Sniamide ASN 32-35** | 99.6 | 98.6 | 92.93 | 91.93 | 92.93 | 91.93 | 89.6 | 88.6 |
| **MB-7** | | | 6.67 | 6.67 | | | | |
| **MB-8** | | | | | 6.67 | 6.67 | | |
| **MB-9** | | | | | | | 10 | 10 |
| **Micro crystalline cellulose** | | 1 | | 1 | | 1 | | 1 |
| **Irganox^{™} 1098** | 0.3 | 0.3 | 0.3 | 0.3 | 0.3 | 0.3 | 0.3 | 0.3 |
| **Irgafos^{™} 168** | 0.1 | 0.1 | 0.1 | 0.1 | 0.1 | 0.1 | 0.1 | 0.1 |
| **Total** | 100 | 100 | 100 | 100 | 100 | 100 | 100 | 100 |
| **% CNT** | 0 | 0 | 1 | 1 | 1 | 1 | 1 | 1 |
| **Aspect ratio CNT** | 0 | 0 | 909 | 909 | 147 | 147 | 50 | 50 |

**Table 6. Polycarbonate based CNT formulations CS1 through CS11.**

| | **CS1** | **CS2** | **CS3** | **CS4** | **CS5** | **CS6** | **CS7** | **CS8** | **CS9** | **CS10** | **CS11** |
|---|---|---|---|---|---|---|---|---|---|---|---|
| **MB-3** | | 33.33 | | | | | | | | | |
| **MB-2** | | | 6.67 | | | | | 0.67 | 3.34 | 20.01 | 33.35 |
| **MB-6** | | | | 8.33 | | | | | | | |
| **MB-1** | | | | | 8.33 | | | | | | |
| **MB-5** | | | | | | 6.67 | | | | | |
| **MB-4** | | | | | | | 10.00 | | | | |
| **PC175** | 99.94 | | 86.61 | 76.01 | 80.34 | 86.61 | 81.01 | 93.34 | 89.96 | 67.44 | 47.08 |
| **PC105** | | 66.61 | 6.66 | 15.60 | 11.27 | 6.66 | 8.93 | 5.93 | 6.65 | 12.49 | 19.51 |
| **Irgafos 168** | 0.06 | 0.06 | 0.06 | 0.06 | 0.06 | 0.06 | 0.06 | 0.06 | 0.06 | 0.06 | 0.06 |
| **Total** | **100.00** | **100.00** | **100.00** | **100.00** | **100.00** | **100.00** | **100.00** | **100.00** | **100.00** | **100.00** | **100.00** |
| **GPC** | 21.50 | 21.80 | 21.20 | 21.40 | 21.10 | 21.50 | 21.20 | 21.20 | 21.10 | 21.10 | 21.10 |
| **% CNT** | 0.00 | 1 | 1 | 1 | 1 | 1 | 1 | 0.1 | 0.5 | 3 | 5 |
| **Aspect ratio CNT** | 0.00 | 50 | 147 | 255 | 909 | 2222 | 878 | 147 | 147 | 147 | 147 |

| | | | | | | | | | | | |
|---|---|---|---|---|---|---|---|---|---|---|---|
| *PC - molecular weight of compounded pellets. | | | | | | | | | | | |

Samples were prepared using twin screw extrusion under the conditions listed in Table 7 and shaped into bars of 40x10x1 mm for the DMA-creep test, using compression molding. The compression molding conditions are given in Table 8. After the compression molding step, the molds were taken out and cooled in air.

**Table 7. Extrusion conditions for polyamide and polycarbonate based compositions.**

| | | PA-based | PC-based |
|---|---|---|---|
| Feed (Zone 0) Temp | °C | 40 | 40 |
| Zone 1 Temp | °C | 180 | 200 |
| Zone 2 Temp | °C | 230 | 250 |
| Zone 3 Temp | °C | 230 | 270 |
| Zone 4 Temp | °C | 250 | 300 |
| Zone 5 Temp | °C | 250 | 300 |
| Zone 6 Temp | °C | 250 | 300 |
| Zone 7 Temp | °C | 250 | 300 |
| Zone 8 Temp | °C | 250 | 300 |
| Zone 9 Temp | °C | 250 | 300 |
| Die Temp | °C | 260 | 300 |

**Table 8. Compression molding conditions for polyamide and polycarbonate based compositions.**

| Cnd: Profile ID. | NONE | PA-based | PC-based |
|---|---|---|---|
| Cnd: Pre-drying time | Hour | 4 | 2 |
| Cnd: Pre-drying temp | °C | 80 | 120 |
| Mold temperature | °C | 250 | 40 |
| Force | ton | 2 | 2 |
| Holding time | s | 300 | 300 |

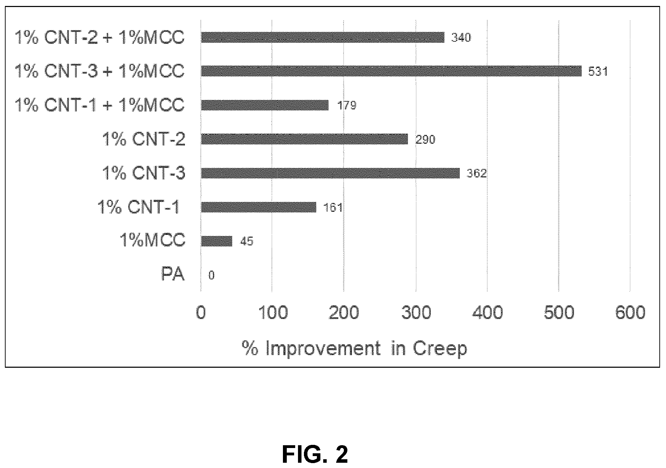

Creep properties were measured according to ASTM E139. To demonstrate the improvement when adding CNT, microcrystalline cellulose or both the percent improvement in creep is presented for the polyamide samples in FIG. 2. FIG. 2 is plotted normalized to the base polymer (polyamide, PA).

While both addition of both CNT's and MCC improve creep, the largest improvement was observed when MCC was also introduced with CNT. The synergy between the two fillers is non-linear.

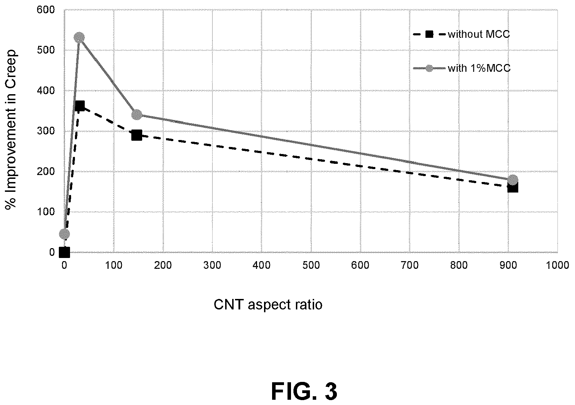

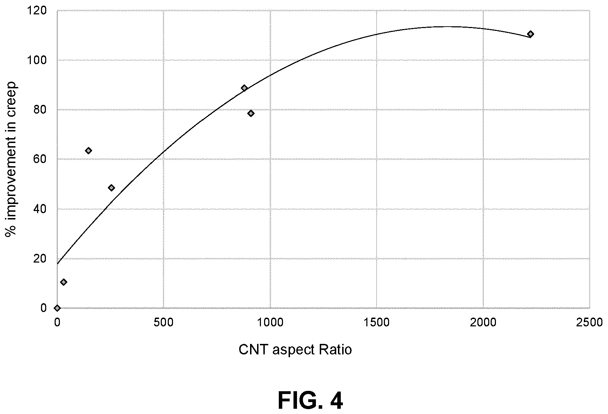

The CNT with the shortest aspect ratio showed the largest improvement in creep as shown in FIG. 3. This is counterintuitive when compared to conventional studies (for example, Creep performance of CNT-based nanocomposites: A parametric study by Wei Jian and Denvid Lau, Carbon, volume 153, 2019, p. 745-756), where an increase in aspect ratio of CNT improves creep behavior (see also the behavior of the PC based samples below). These values were also obtained for the polycarbonate-based resins. FIG. 4 shows the percent improvement in creep as a function of the aspect ratio. As shown, creep performance improved with the increase in the CNT aspect ratio - unlike for the polyamide samples.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition comprising:
a. from about 40 wt. % to about 95 wt. % of a thermoplastic resin, wherein the thermoplastic resin comprises a semicrystalline polymer; and
b. from about 0.1 wt. % to about 5 wt. % of carbon nanotubes, wherein the carbon nanotubes have an aspect ratio less than about 200,
wherein the composition exhibits a percent improvement in creep of at least 40% when measured in accordance with ASTM E139, and
wherein the combined weight percent value of all components does not exceed 100 wt. %, and all weight percent values are based on the total weight of the composition.

2. The composition according to claim 1, wherein the thermoplastic resin comprises polyamide, syndiotactic polystyrene, polyester, polyphenylene sulfide (PPS), copolymers thereof, or a combination thereof.

3. The composition according to claim 1 or 2, wherein the composition further comprises a microcrystalline cellulose material.

4. The composition according to any one of claims 1-3, wherein the composition further comprises from about 0.01 wt. % to about 8 wt. % of a microcrystalline cellulose material.

5. The composition according to any one of claims 1-4, wherein the carbon nanotubes have an aspect ratio less than about 160.

6. The composition according to any one of claims 1-4, wherein the carbon nanotubes have an aspect ratio less than about 70.

7. The composition according to any one of claims 1-4, wherein the carbon nanotubes have an aspect ratio less than about 50.

8. The composition according to any one of claims 1-7, wherein the semicrystalline resin is a polyamide.

9. The composition according to claims 1-8, wherein the composition exhibits a percent improved creep of at least 100% compared to a neat sample of thermoplastic resin.

10. The composition according to any one of claims 1 to 9, further comprising from about 0.01 wt. % to about 25 wt. % of at least one additional additive.

11. The composition according to claim 10, wherein the at least one additional additive comprises a nucleation agent, stabilizer, additional impact modifier, acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.

12. An article comprising the thermoplastic composition according to any of claims 1 to 11.

13. A method comprising subjecting a polymer composition of claims 1-10 to a process comprising foaming, sheet forming, pipe extrusion, or nano molding technology (NMT) processes.
